# EUROPEAN PATENT APPLICATION

(11) **EP 4 840 925 A1**
(43) Date of publication of application: **18.11.2026**
(21) Application number: 26167692.8
(22) Date of filing: 25.03.2026
(51) Int. Cl.: C10L 5/04

(54) **METHOD AND APPARATUS FOR HIGH TEMPERATURE HEATING SYSTEM WITH SCRUBBING SYSTEM (HTHSWSS)**

(30) Priority: 14.05.2025 MY PI2025002931
(71) Applicant: Granophene Sdn. Bhd., Petaling Jaya Selangor 46200 (MY)
(72) Inventor: NG, CHENG SINN, 60000 Wilayah Persekutuan, Kuala Lumpur (MY)
(74) Representative: Gevers Patents

(57) **Abstract**

There is provided a method (1) for high temperature heating system (2) comprising:
The high temperature heating system (2) with liquid scrubbing (11) is designed to accommodate the high temperature heating system (2) process to eliminate the gases (10) produced and the bio- oil (17) discharged from the biomass through the liquid scrubbing (11). The final product of high temperature heating system (2) from biomass is biochar obtained from the high temperature heating system (2) process. IIOT (Industry Internet of things) which acts as a bridge between hardware and software interconnection. The Al (Artificial Intelligence) engine will act like a brainchild for the machine learning to pick up the data from time to time and feedback to the hardware for the optimum process to take place for the deep learning process.

## Description

### FIELD OF INVENTION

This invention relates to a method for heating the biomass and eliminating the smoke and odour produce during the heating process and relates more particularly to a method where the quality of the biochar produced from the biomass during the heating process are homogenise heated in the high temperature heating system with scrubbing system to eliminate the smoke and odour produce during the heating process.

The above process and setting for the system are analysed by a machine learning and a deep learning system. An apparatus for the process with the setup of the high temperature heating system with scrubbing system is also disclosed.

### BACKGROUND TO THE INVENTION

Biomass is the byproduct from the process left over. It has various categories such as solid biomass and semi solid biomass. The segregation of biomass is obtained at the different stages of process. Therefore, the various types of biomasses were obtained and categories according to the usage and mixing for other purposes. The segregated biomass will be stored at a facility such as in the warehouse or open compound to sustain its freshness prior dispatch it to the appropriate destination for its purpose respectively.

The quality of biomass is critically important during storage prior despatch. These are to avoid any contamination that leads to quality issues that cause the buyer to reject the biomass. Moisture is another factor that causes the biomass to degrade as it will form mold at the surface of the biomass. Moldy biomass will not only deteriorate the quality of the biomass, nevertheless it also harmful to the people that handling it. Proper storage and monitoring the humidity of the surroundings is important to maintain the freshness and quality of the biomass.

During the process of dispatching biomass, samples were taken at various spots in order to determine the consistency of the biomass quality. Buyers are allowed to appoint their own tester for the testing of the biomass quality to justify the quality of the biomass quality as per stated in the contract agreement. Any dispute on the quality of the biomass shall be determined from the various samples that were collected for testing and analysis.

The purchased biomass will be stored properly in the warehouse or open compound and ready to be further processed for other purposes.

The process is call high temperature heating system with scrubbing system. The biomass will be taken and filled in a vessel in the absence of oxygen.

Heat is slowly applied to high temperature heating system with scrubbing system install with heat elements that gradually increased via a few steps while maintaining to a certain temperature for the heating process to take place. The unwanted gas that is trapped inside the biomass compound as well as the bio-oil is released during this process.

There will be indicators installed at the control panel for the heating process. Such indicators capture the signals from the control instrument that was installed in the high temperature heating system with scrubbing system such as the thermocouple which shows the temperature when heating. The timer will record the start time, end time and duration of the heating process.

During the high temperature heating system with scrubbing system process there will be gases released from the biomass. The gases will be discharged and channeled to the scrubbing system. The purpose of the scrubbing system is to capture gases and to neutralize them in liquid to prevent any smoke and odour from being released into the atmosphere.

The liquid from the scrubbing system needs to be topped up with liquid from time to time depending on the level of the liquid threshold while the process continues running. The scrubbing system is equipped with a level sensor to determine the level of the liquid to achieve optimum result to capture the smoke and odour while having a green environment working place, without pollution and without carbon emissions.

At the same time during the high temperature heating system with scrubbing system process some bio-oil will be released at the bottom of the high temperature heating with scrubbing system. These may be used for other purposes.

Once the high temperature heating system with scrubbing system stops, the biomass will turn into biochar. The biochar will be left in the high temperature heating system with scrubbing system for approximately a day before it is taken out.

### SUMMARY OF INVENTION

The invention relates to a method and the relevant apparatus for the purpose of producing green biochar, while eliminating smoke emission and odour during the process of high temperature heating system with scrubbing system of the biomass.

The control system and instrumentation coupled with IIOT {Industry Internet of things) sensors are installed in the high temperature heating system with scrubbing system. The high temperature heating system with scrubbing system is governed by the Al engine, which significantly optimises and eliminate harmful smoke and odour intelligently and effectively.

The method comprises:
- The high temperature heating system with scrubbing system is fill up with biomass.
- Heat is applied gradually from the heat element to the high temperature heating system with scrubbing system.
- There will be a few steps of heating that is applied gradually to the high temperature heating system with scrubbing system where the base metal of the high temperature heating system with scrubbing system which is constantly in contact with the biomass will slowly cause the biomass to heat up, dry up and shrink.
- During the process of high temperature heating system with scrubbing system, heat applied is gradually increased to penetrate the composition of the biomass. The heating process will cause the biomass to produce gases and bio-oil.
- At certain points of time at a stipulated temperature it hold and allow the gases to be discharged directly from the high temperature heating system with scrubbing system to the liquid scrubbing.
- At the same time the bio-oil is produced during the high temperature heating system with scrubbing system process; it will be collected at the bottom of the high temperature heating system with scrubbing system.
- The gases produced during the high temperature heating system with scrubbing system process; it will have the liquid scrubbing to eliminate the smoke as well as the odour.
- The continuation of process from high temperature heating system with scrubbing system is monitor and control from the control system install with IIOT (Industry Internet of things) that bridging the Al engine from machine learning and deep learning that acquires the data from high temperature heating system with scrubbing system from time to time to provide the best and optimum results.
- This intelligence system installs in the high temperature heating system with scrubbing system to help overcome environmental issues and ESG (Environmental Sustainable & Governance) compliance such as elimination of smoke and odour which are harmful to human beings and nature.

### DESCRIPTION OF DRAWING

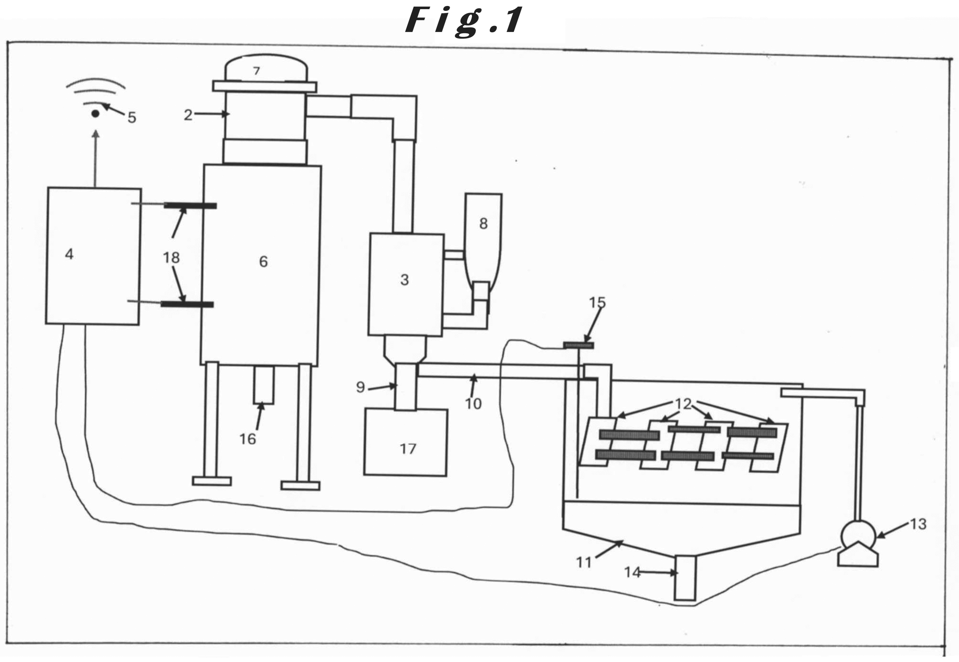

For the invention to be better understood and readily put into practice, there shall be described in way of a non-limited example a preferred embodiment of the present invention, the description being in reference to the accompanying illustrative drawings in from figure 1 showing a schematic flow diagram of a high temperature heating system with scrubbing system process governs by the Al engine install with the control system.

### DETAILED DESCRIPTION OF THE PREFERRED EMBODIMENTS

A detailed description of the preferred embodiments of the invention is disclosed. It should be understood; however, the disclosed preferred embodiments are exemplary of the invention which embodied in various parts. Therefore, the details disclosed are not to be interpreted as limiting, but as the basis for the claims in the art on the invention.

The preferred embodiment is provided with a method where the high temperature heating system with scrubbing system process assisted by the liquid scrubbing (11) governed by the Al engine that bridges the IIOT (Industry Internet of things) and the hardware as refer to the high temperature heating system (2) and the liquid scrubbing (11). **Figure 1****.** Showing the high temperature heating system scrubbing system (11) which comprises the high temperature heating system (2) with the purpose of heating the biomass internally under the absence of oxygen by raising the temperature through the heat element system (6) that surrounds the high temperature heating system (2). The heat is being supplied gradually to heat the biomass at a stipulated temperature. There will be a few steps of heating in progress during the biomass inside the high temperature heating system (2). In the process of heating some gases will be produced from the biomass internally, therefore the gases will be channeled from the high temperature heating system (2) internally to outside through piping to a system called liquid scrubbing system (11). The purpose of liquid scrubbing system (11) is to capture the gases produced during the high temperature heating with scrubbing system process and channel the gases and odour through a smoke discharge point (9) to prevent any pollution in the atmosphere. The liquid scrubbing system (11) acts as a blanket to capture the gases produced from the biomass as well as to cover the odour smell and some tiny particles that settle beneath the liquid scrubbing system (11). At the same time, biomass heated in the high temperature heating system (2) will produce bio-oil. The bio-oil is discharged from the bottom of the high temperature heating system (2) via the discharge point for the bio-oil (17). After a period when the biomass is complete heat up in the high temperature heating system (2), the gases and bio-oil will stop production by the source of the biomass. Eventually the biomass will turn to biochar once the process is completed. The remaining biochar in the high temperature heating system (2) will be collected the next day after it is cold down to room temperature.

### Nomenclature

1. High Temperature Heating System with Scrubbing System
2. High Temperature Heating System
3. Condenser
4. Control panel
5. Wifi System
6. Heating element system
7. Top opening of the High Temperature Heating System
8. Liquid level of the condenser
9. Bio-oil discharge point
10. Smoke discharge point
11. Liquid scrubbing
12. Smoke captures neutralize compartment
13. Pump for topping up the liquid
14. Discharge point for cleaning scrubbing system
15. Level sensor
16. Discharge point for cleaning High Temperature Heating System
17. Bio-oil
18. Heating sensor

## Claims

1. A method (1) for high temperature heating system (2) converts the biomass as a green energy source to biochar.
- The biomass is filled internally in the high temperature heating system (2) with the absence of oxygen to allow the process to take place.
- Subsequently the heat is generated from the heat element system (6) that wrap up the high temperature heating system (2).
- Heat energy gradually increases at a different rate to slowly heat the biomass internally in the high temperature heating system (2).
- The moisture and internal contents from the biomass such as gases and oil will slowly be discharged from time to time until it stops once inside the biomass content are completely heat up.
- The biomass volume will gradually reduce from time to time when the gases are discharged to the liquid scrubbing (11).
- At the same time bio-oil (17) is produced during the heating process at the bottom of the high temperature heating system (2). Bio-oil (17) is collected and used for other purposes.

2. A method (1) as claimed in claim 1, the biochar is collected as the final product after the heating process. Biomass slowly turns into biochar at the end of the process.

3. A method (1) as claimed in any preceding claim, including the heat element system (6) which link with the IIOT (Industry Internet of things) sensors (18) to capture the heat while the heat is supplied via the heat blanket for the heating of the biomass internally. The temperature will gradually increases until it reaches 750 degrees Celsius. The heat parameters are preset according to a few steps to gradually heat up the content of the biomass.

4. A method (1) as claimed in any preceding claim, including the control system (4) govern by the Al (Artificial Intelligence) engine using machine learning and deep learning to optimize the results during the high temperature heating system with scrubbing system process.

5. A method (1) as claimed in any preceding claim, including the discharge of the bio-oil (9) during the high temperature heating system with scrubbing system process take place as a result from heating of the biomass when the heat is applied gradually until reaching 500 degrees celsius to 750 degrees celsius.

6. A method (1) as claimed in any preceding claim, including the release of gases as a result of high temperature heating system (2) process will channel to the liquid scrubbing (11) to capture the smoke and odour in the gases.

7. A method (1) as claimed in any preceding claim, including the use of the Modbus install in the control system (4) as a linking of the IIOT (Industry Internet of things) and Al (Artificial Intelligence) control for the high temperature heating system (2) with the liquid scrubbing (11).

8. A method (1) as claimed in any preceding claim, including the use of remote control having telco register with existing network provider for internet/Wi-Fi connection (5) and access the high temperature heating system (2) with the liquid scrubbing (11) without the presence of human beings at site.

9. A method (1) as claimed in any preceding claim, including the use of biochar is a sustainable conductive agent produces from biomass.

10. A method (1) as claimed in any preceding claim, including the liquid top up from a pump (13) base on the level controller (15) when the low liquid level of the liquid scrubbing (11) is at the minimum threshold when the liquid level is low.
